**Europäisches Patentamt**

**European Patent Office**

**Office européen des brevets**

(19)

(11) Veröffentlichungsnummer: **0 185 803**
**B1**

(12)

# EUROPÄISCHE PATENTSCHRIFT

(45) Veröffentlichungstag der Patentschrift:
**30.03.88**

(21) Anmeldenummer: **84201738.6**

(22) Anmeldetag: **27.11.84**

(51) Int. Cl.⁴: **F 16 K 27/07**

(54) **Bodenventil für Tankwagen zum Transport gasförmiger oder flüssiger Stoffe.**

(43) Veröffentlichungstag der Anmeldung:
**02.07.86 Patentblatt 86/27**

(45) Bekanntmachung des Hinweises auf die Patenterteilung:
**30.03.88 Patentblatt 88/13**

(84) Benannte Vertragsstaaten:
**AT BE DE FR IT NL**

(56) Entgegenhaltungen:
**FR - A - 1 498 923**
**US - A - 3 910 551**
**US - A - 4 016 907**

(73) Patentinhaber: **KTD-Plasticon Kunststofftechnik GmbH,
Thyssenstrasse Tor 2, D-4220 Dinslaken (DE)**

(72) Erfinder: **Kolste, Christiaan Hendrik,
Enschedesestraat 184, NL-7552 CH Hengelo (O) (NL)**

(74) Vertreter: **Ackmann, Günther, Dr.-Ing.,
Claubergstrasse 24 Postfach 10 09 22,
D-4100 Duisburg 1 (DE)**

## Beschreibung

Die Erfindung betrifft ein dem Oberbegriff des Anspruchs 1 entsprechendes Bodenventil für Tankwagen. Bei einem bekannten Bodenventil dieser Art, wie es beispielsweise in der US-A-3 910 551 beschrieben ist, ist das den Ventilsitz bildende Ventilunterteil unmittelbar am Boden des Tanks angeschraubt. Eine solche Befestigung hat den Nachteil, dass die Schraubenköpfe dem Tankinhalt ausgesetzt sind und das Bodenventil nicht für Stoffe geeignet ist, welche die metallischen Befestigungsmittel zerstören. Ein weiterer wesentlicher Nachteil besteht darin, dass das Ventilunterteil bei einem Verkehrsunfall des Tankwagens oder durch andere äussere Einwirkungen abgerissen werden kann und der häufig gefährliche Tankinhalt ausläuft. Die dem Bodenventil zugehörigen miteinander verschraubten, die Schliesskräfte übertragenden und der Tankflüssigkeit ausgesetzten Bauteile bestehen aus Metall und bedürfen einer sehr aufwendigen Bearbeitung. Weiterhin ist aus der US-A-4 016 907 eine Ausführung bekannt, bei der unter einem am Tankboden angebrachten Sattel ein Ventil und unter dem Ventil ein Anschlussrohr mit gemeinsamen Bolzen befestigt ist, wobei die Bolzen zwischen dem Ventilgehäuse und dem Flansch des Anschlussrohres mit je einer Sollbruchrille versehen sind. Bei einem Unfall kann das ausserhalb der Aussenumgrenzung des Tankbodens liegende Ventil abgerissen werden und es fehlt eine durch einen Abriss gesteuerte Schliessfunktion für das Ventil.

Demgegenüber liegt der Erfindung die Aufgabe zugrunde, ein Bodenventil der gattungsgemässen Art derart auszubilden, dass bei einem Abreissen oder einer Beschädigung des Entleerungsrohres bzw. Knierohres ein sicherer Verschluss der Bodenöffnung des Tanks sichergestellt ist.

Durch die dem Kennzeichen des Anspruchs 1 entsprechende Lösung wird der Vorteil erzielt, dass das Bodenventil auch beim Abreissen des angeflanschten Entleerungsrohres bzw. Knierohres (Anschlussrohr) unbeschädigt und in der Schliessstellung bleibt. Die Sollbruchstelle an den Gewindebolzen trägt dafür Sorge, dass das Anschlussrohr bei Stosseinwirkungen unter dem Ventil abreisst, ohne die Schraubbefestigungen des Ventilunterteils zu beeinträchtigen. Der Zwischenring dient gleichzeitig als Distanzring für das Anschlussrohr, indem dessen Anschlussflansche in Höhe der unter den Sollbruchstellen befindlichen Enden der Gewindebolzen zu liegen kommen. Im Falle eines Abreissens des Anschlussflansches reisst auch der Zwischenring ab, so dass ein etwaiger Druckluftanschluss für ein Öffnen des Ventils unterbrochen ist. Das Bodenventil ist besonders für eine korrosionsbeständige Ausführung geeignet, bei der das Ventilunterteil, die Ventilkappe und der Zwischenring aus einem gegen den Tankinhalt widerstandsfähigen Kunststoff bestehen.

Der Gegenstand der Erfindung ist in der Zeichnung in einem Ausführungsbeispiel dargestellt: es zeigt:

Fig. 1 ein in einen Tankboden eingebautes Bodenventil in einem Längsschnitt und

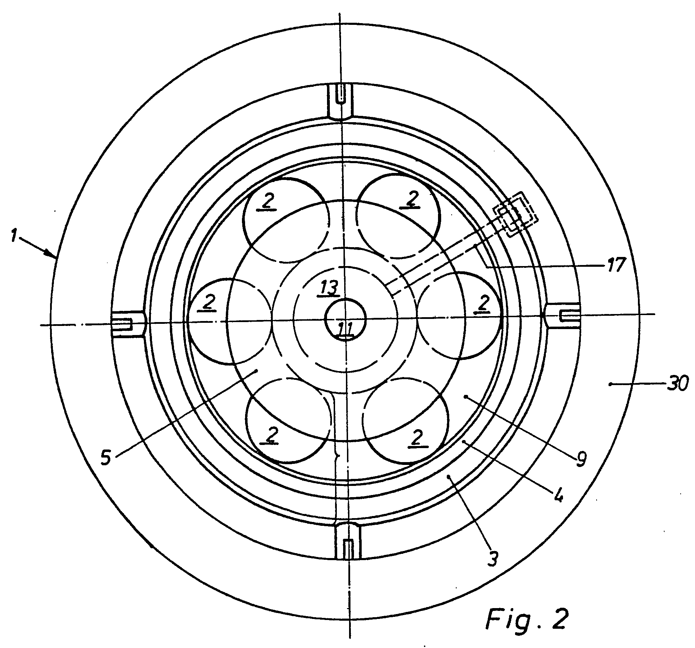

Fig. 2 das dem Bodenventil der Fig. 1 zugehörige Ventilunterteil in einer Draufsicht.

Das Bodenventil besteht im wesentlichen aus einem in der Bodenöffnung 28 eines Tankbodens 27 bzw. eines liegenden Tankmantels angeordneten Ventilunterteil 1 und einer Ventilkappe 6, die von einer Druckfeder 15 abdichtend gegen einen Ventilsitz 3 gedrückt und pneumatisch vom Ventilsitz 3 abgehoben wird, so dass der Tankinhalt durch im Ventilunterteil 1 vorgesehene Entleerungsbohrungen 2 in ein unterhalb des Bodenventils angeflanschtes Anschlussrohr 24 abfliessen kann.

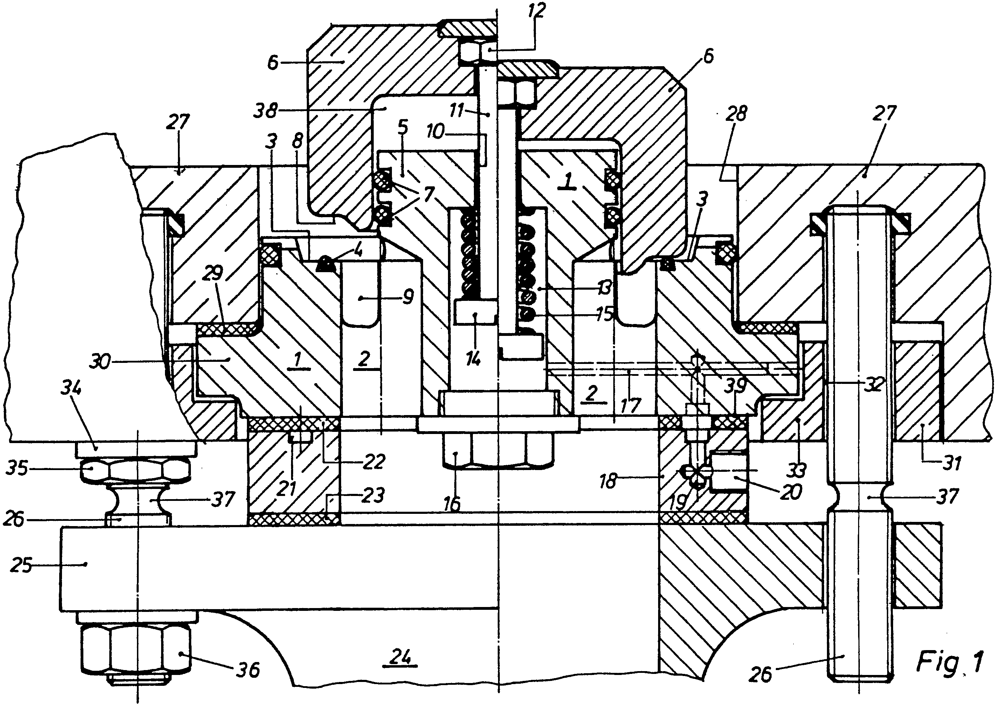

Das scheibenförmige Ventilunterteil 1 ist mit einem nach oben weisenden Ventilkolben 5 versehen, auf dem unter Zwischenlage von Dichtungsringen 7 die zylinderförmig ausgebildete Ventilkappe 6 axial verschiebbar gelagert ist. In der Schliesslage liegt die Ventilkappe 6 mit ihrem Rand 8 auf dem mit einem Dichtungsring 4 versehenen ringförmigen Ventilsitz 3 auf. Innen neben dem Ventilsitz 3 befindet sich im Ventilunterteil 1 ein ringförmiger Ablaufkanal 9, an den sechs Entleerungsbohrungen 2 anschliessen, die in das angeflanschte Anschlussrohr 24 münden. Der Ventilkolben ist mit einem Hohlraum 13 und einer zentrischen Bohrung 10 versehen. Eine zentrisch an der Ventilkappe 6 mittels einer Mutter 12 o. dgl. befestigte Zugstange 11 ragt durch die Bohrung 10 in den Hohlraum 13 und besitzt an ihrem unteren Ende eine Ringschulter 14 für die Druckfeder 15, die sich mit ihrem oberen Ende am Ventilkolben 5 abstützt und die Zugstange 11 und damit die Ventilkappe 6 nach unten gegen den Ventilsitz 3 drückt (vgl. Fig. 1 rechte Hälfte). Der Hohlraum 13 ist mit einem Schraubenverschluss 16 versehen, der einerseits die Montage der Zugstange 11 und Druckfeder 15 ermöglicht und andererseits die der pneumatischen Steuerung dienende Druckluftleitung verschliesst.

Im Ventilunterteil 1 ist weiterhin ein Druckluftkanal 17 vorgesehen, der vom Hohlraum 13 zu einer die Basis des Ventilunterteils 1 bildenden Ringfläche 39 führt. An der Ringfläche 39 liegt unter Zwischenlage eines Dichtungsringes 22 ein Zwischenring 18 an, der mit einem Anschlussgewinde 20 für eine Druckluftleitung und einen an den Druckluftkanal 17 angeschlossenen Verbindungskanal 19 versehen ist. Auf der oberen Ringfläche des Zwischenringes 18 ist eine Ringnut 24 eingearbeitet, durch welche die Druckluft in den Druckluftkanal 17 geleitet wird. Für den Abfluss des Tankinhalts ist unter dem Zwischenring 18 und unter Zwischenlage eines Dichtungsringes 23 das Anschlussrohr 24 angeflanscht, das in der Regel bogenförmig als Knierohr ausgebildet ist.

Zur Befestigung des Bodenventils in der Bodenöffnung 28 des Tankbodens 27 sind neben der Bodenöffnung 28 und über den Umfang verteilt mehrere Gewindebolzen 26 im Tankboden 27 verankert. Das Ventilunterteil 1 ist mit einem unter Zwischenlage eines Dichtungsringes 29 gegen den Aussenrand der Bodenöffnung 28 anliegenden Kragen 30 versehen, der mittels eines Klemmringes 31 angespannt wird. Der Klemmring 31 ist mit Bohrungen 32 versehen, so dass er auf die Gewindebolzen 26 aufsteckbar ist. Ausserdem besitzt er eine das Ventilunterteil 1 ringförmig unterfassende Klemmringnase 33. Durch Muttern 35 ist der Klemmring 31 an den Gewindebolzen 26 befestigt, wobei Ringscheiben 34 untergelegt sind. Unterhalb der Mutter 35 ist jeder Gewindebolzen 26 mit einer Sollbruchstelle 37 versehen, die beispielsweise durch eine eingearbeitete Ringnut bestimmt sein kann. Der Anschlussflansch 25 des Anschlussrohres 24 wird durch Muttern 36 an den Gewindebolzen 26 befestigt, wobei der Zwischenring 18 die Lage des Anschlussflansches 25 unterhalb der Sollbruchstellen 37 fixiert.

In der Schliesslage des Bodenventils drückt die Druckfeder 15 die Ventilkappe 6 gegen den Ventilsitz 3, so dass kein Tankinhalt in den Ablaufkanal 9 strömen kann. Zum Öffnen des Bodenventils wird von einer an das Anschlussgewinde 20 angeschlossenen Leitung Druckluft über den Verbindungskanal 19, die Ringnut 21, den Druckluftkanal 17, den Hohlraum 13 und die zentrische Bohrung 10 in die zwischen Ventilkolben 5 und Ventilkappe 6 befindliche Zylinderkammer 38 eingeleitet. Dabei wird die Ventilkappe 6 entgegen der Kraft der Druckfeder 15 vom Ventilsitz 3 abgehoben, so dass der Tankinhalt über den Ablaufkanal 9 und die Entleerungsbohrungen 2 durch den Zwischenring 18 in das Abschlussrohr 24 strömen kann.

Im Falle eines Abreissens der Druckluftleitung wird die Zylinderkammer 38 sofort entspannt, so dass die Druckfeder 15 die Ventilkappe 6 auf den Ventilsitz 3 presst. Wird das Anschlussrohr 24 abgerissen, erfolgt eine Trennung entlang der Sollbruchstellen 37 in den Gewindebolzen 26. Das Bodenventil hingegen wird von den Muttern 35 weiterhin auf dem oberhalb der Sollbruchstellen 37 verbleibenden Teil der Gewindebolzen 26 fest gegen den Sitz der Bodenöffnung 28 im Tankboden 27 gedrückt. Beim Abreissen des Anschlussrohres 24 wird der Zwischenring 18 mit weggerissen, so dass die sofortige Entspannung der Zylinderkammer 38 erfolgt und die Druckfeder 15 wirksam wird.

Die mit dem Tankinhalt in Berührung kommenden Teile des Bodenventils, nämlich das Ventilunterteil 1, die Ventilkappe 6 und der Zwischenring 18 bestehen vorzugsweise aus einem gegen den Tankinhalt, wie beispielsweise Säure, Laugen o. dgl. widerstandsfähigen Kunststoff und können z.B. durch Spritzgiessen hergestellt sein. Die Zugstange 11 kann aus einem geeigneten Metall oder Kunststoff und die Druckfeder 15 aus Federstahl bestehen. Auch der Zwischenring 18 kann bedarfsweise aus Kunststoff oder Metall bestehen.

### Patentansprüche

1. Bodenventil für Tankwagen zum Transport gasförmiger oder flüssiger Stoffe, bestehend aus einem in einer Bodenöffnung (28) des Tanks angeordneten, einen Ventilsitz (3) bildenden Ventilunterteil (1), einer das Schliessorgan bildenden zylinderförmig ausgebildeten Ventilkappe (6), die auf einem dem Ventilunterteil (1) zugeordneten Ventilkolben (5) axial verschiebbar gelagert ist und von einer Druckfeder (15) in die Schliessstellung gedrückt wird und Steuermittel zum Abheben der Ventilkappe (6) vom Ventilsitz (3), wobei die zwischen dem Ventilkolben (5) und der Ventilkappe (6) gebildete Zylinderkammer (38) über einen im Ventilunterteil (1) vorgesehenen Druckluftkanal (17) an eine Druckquelle anschliessbar ist, dadurch gekennzeichnet, dass das innerhalb der Aussenumgrenzung des Tankbodens (27) befindliche Ventilunterteil (1) mit einem gegen den Aussenrand der Bodenöffnung (28) anliegenden und durch einen Klemmring (31) befestigten Kragen (30) versehen ist, wobei der Klemmring (31) Bohrungen (32) besitzt und mit Muttern (35) an im Tankboden (27) verankerten Gewindebolzen (26) befestigt ist, die unterhalb der den Klemmring (31) befestigenden Muttern (35) mit einer Sollbruchstelle (37) versehen sind und an deren unter den Sollbruchstellen (37) liegenden Enden ein Anschlussrohr (24) angeflanscht ist, dass zwischen das Ventilunterteil (1) und das Anschlussrohr (24) ein Zwischenring (18) eingespannt ist, der mit einem Anschlussgewinde (20) für eine Druckluftleitung und einem an den Druckluftkanal (17) des Ventilunterteils (1) anschliessenden Verbindungskanal (19) mit Ringnut (21) versehen ist.

2. Bodenventil nach Anspruch 1, dadurch gekennzeichnet, dass das Ventilunterteil (1), die Ventilkappe (6) und der Zwischenring (18) aus einem gegen den Tankinhalt widerstandsfähigen Kunststoff besteht.

### Claims

1. A bottom valve for tankers for conveying gaseous or liquid substances, the valve comprising a base (1) disposed in an opening (28) at the bottom of the tank and forming a valve seat (3), a cylindrical valve cap (6) constituting the closing means and mounted for axial movement on a valve piston (5) associated with the base (1) and pressed into the closed position by a compression spring (15), and actuating means for lifting the valve cap (6) from the seat, the cylindrical chamber (38) formed between the valve piston (5) and the cap (6) being adapted for connection to a pressure source via a compressed-air duct (17) provided in the valve base (1), characterised in that the base (1), which is inside the outer periphery of the tank bottom (17) has a collar (30) adjacent the outer edge of the bottom opening (28) and secured by a clamping ring (31), the ring (31) having bores (32) and being secured by screws (35) to threaded bolts (26) anchored to the tank bottom (27), the bolts being formed with a set breaking point (37) below the nuts (35) securing the clamping ring (31), and a connecting pipe (24) being screwed to the ends of the bolts under the set breaking points (37), an intermediate ring (18) being clamped between the base (1) and the connecting pipe (24) and having a connecting thread (20) for a compressed-air pipe and a connecting duct (19) and annnular groove (21) adjacent the compressed-air duct (17) of the valve base (1).

2. A bottom valve according to claim 1, characterised in that the base (1), the cap (6) and the intermediate ring (18) are made of a plastics resistant to the contents of the tank.

## Revendications

1. Clapet de fond de cuve pour véhicule-citerne de transport de produits liquides ou gazeux, constitué d'une embase de soupape (1) montée dans l'orifice du fond (28) de la citerne et formant un siège de soupape (3), d'un capot de soupape (6) cylindrique, formant l'organe d'obturation, monté, en étant décalé axialement, sur un piston de soupape (5) associé à l'embase de soupape (1) et repoussé en la position de fermeture par un ressort de pression (15) et de moyens de commande pour soulever le capot de soupape (6) du siège de soupape (3), la chambre formant cylindre et ménagée entre le piston de soupape (5) et le capot de soupape (6) pouvant communiquer, par un canal à air comprimé (17) ménagé dans l'embase de soupape (1), avec une source de pression, caractérisé en ce que l'embase de soupape (1), se trouvant dans le contour extérieur du fond de la citerne (27), est munie d'un collet (30) appliqué au bord extérieur de l'orifice du fond (28) et fixé par un anneau de serrage (31), ce dernier (31) ayant des perçages (32) et étant fixé par des écrous (35) à des boulons (26) qui sont ancrés dans le fond de la citerne (27), qui sont munis en-dessous des écrous (35) formant l'anneau de serrage (31) d'un point de rupture (37) et aux extrémités desquels, se trouvant en-dessous des points de rupture (37), est bridé un tuyau de raccordement (24), en ce qu'entre l'embase de soupape (1) et le tuyau de raccordement (24) est bloqué un anneau intermédiaire (18), qui est muni d'un taraudage de raccordement (20) d'un conduit d'air comprimé et d'un canal de liaison (19) à gorge annulaire (21) raccordé au canal d'air comprimé (17) de l'embase de soupape (1).

2. Clapet de fond suivant la revendication 1, caractérisé en ce que l'embase de soupape (1), le capot de soupape (6) et l'anneau intermédiaire (18) sont en une matière plastique résistant au contenu de la citerne.

Fig. 1

Fig. 2